# EUROPÄISCHE PATENTSCHRIFT

(11) **EP 1 763 427 B1**
(45) Veröffentlichungstag und Bekanntmachung des Hinweises auf die Patenterteilung: **14.01.2009**
(21) Anmeldenummer: 05751696.5
(22) Anmeldetag: 18.06.2005
(51) Int. Cl.: B29C 49/00, B29C 49/12, B65D 23/10, B29K 23/00, B29K 27/00, B29K 67/00, B29L 22/00

(54) **KUNSTSTOFFBEHÄLTER MIT ANGEFORMTEM GRIFFTEIL, PREFORMLING UND HERSTELLVERFAHREN FÜR DEN KUNSTSTOFFBEHÄLTER**
PLASTIC CONTAINER HAVING A HANDLE PART MOLDED ONTO IT, PREFORM AND METHOD FOR PRODUCING SAID PLASTIC CONTAINER
RECIPIENT EN PLASTIQUE COMPRENANT UNE PARTIE DE PREHENSION MOULEE CONTRE LE RECIPIENT, EBAUCHE PREFORMEE ET PROCEDE DE REALISATION DE RECIPIENT EN PLASTIQUE

(30) Priorität: 08.07.2004 CH 114104
(43) Veröffentlichungstag der Anmeldung: 21.03.2007
(73) Patentinhaber: Alpla-Werke Alwin Lehner GmbH und Co.KG, 6971 Hard (AT)
(72) Erfinder: KÜNZ, Johann, A-6971 Hard (AT)
(74) Vertreter: Hasler, Erich
(86) Internationale Anmeldenummer: PCT/EP2005/006593
(87) Internationale Veröffentlichungsnummer: WO 2006/005413

(56) Entgegenhaltungen:
- EP-A- 1 083 129
- DE-A- 10 010 151
- DE-B- 2 456 723
- US-A- 4 199 129
- US-A- 4 280 630
- US-A- 5 178 817
- PATENT ABSTRACTS OF JAPAN Bd. 0173, Nr. 97 (M-1452), 26. Juli 1993 (1993-07-26) & JP 05 077312 A (HONSHU PAPER CO LTD), 30. März 1993 (1993-03-30)

## Beschreibung

Die Erfindung betrifft einen Kunststoffbehälter, insbesondere eine Kunststoffflasche, mit einem angeformten Griffteil gemäss dem Oberbegriff des Patentanspruchs 1. Die Erfindung betrifft auch einen Preformling sowie ein Verfahren zur Herstellung eines derartigen Kunststoffbehälters.

Die in der Vergangenheit üblichen Behälter aus Weiss- oder Buntblech, aus Glas oder auch aus Keramik werden in zunehmendem Masse von Behältern aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehälter zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältern, insbesondere von Kunststoffflaschen, beim Konsumenten zu fördern.

Für die Herstellung von Kunststoffbehältern, insbesondere Kunststoffflaschen, sind verschiedene Verfahren bekannt, deren Anwendung nicht zuletzt auch von den verwendeten Kunststoffen abhängt. Meist werden die Kunststoffbehälter in einem Blasverfahren hergestellt, bei dem der Behälter, beispielsweise eine Flasche, durch Überdruck in einer Blasform in seine endgültige Form aufgeblasen wird. Beim Blasformen unterscheidet man verschiedene Verfahrenstechniken, von denen insbesondere das Extrusionsblasen, das Spritzblasen und das Spritzstreckblasen zu nennen sind. Beim Extrusionsblasen wird ein Kunststoffschlauch heiss extrudiert, in eine zweigeteilte Blasform eingebracht und über einen Blasdorn durch Überdruck gemäss der Formkavität aufgeblasen. Das Extrusionsblasen ist jedoch auf einige wenige Kunststoffe beschränkt.

Das Spritzblas- und das Spritzstreckblasverfahren weisen deutlich kürzere Zykluszeiten bei der Flaschenherstellung auf. Ausserdem ist bei diesen Verfahren die Flexibilität bezüglich der einsetzbaren Kunststoffe deutlich grösser als beim Extrusionsblasverfahren. Insbesondere kann im Spritzblas- bzw. im Spritzstreckblasverfahren PET verarbeitet werden. Bei diesen beiden Verfahren handelt es sich um eine Kombination aus einem Kunststoffspritzprozess und einem Blasformverfahren. Dabei wird zunächst in einem Kunststoffspritzprozess in einer Spritzform ein Preformling hergestellt. Dieser Preformling wird üblicherweise entformt und gegebenenfalls konditioniert. In einem weiteren Verarbeitungsschritt wird der Preformling schliesslich in eine Blasform eingebracht, in welcher er mit Überdruck auf die gewünschte Form aufgeblasen wird. Vielfach wird der gespritzte Preformling in einem Streckblasverfahren weiterverarbeitet, bei dem der vorgeformte Preformling in die Formkavität einer Blasform eingebracht und während des Blasprozesses mit einem Reckdorn gestreckt wird. Das Blasen bzw. Streckblasen kann unmittelbar anschliessend an die Herstellung des Preformlings erfolgen. In einer alternativen Variante werden die gespritzten Preformlings zwischengelagert und erst zu einem späteren Zeitpunkt an einer getrennten Blas- bzw. Streckblasvorrichtung in die endgültige Form gebracht. Es ist auch eine Variante des Spritzblasverfahrens bekannt, bei dem der Preformling nach dem Spritzvorgang auf dem Spritzkern verbleibt und die Blasform auf den Spritzkern zugestellt wird. Dabei bildet der Spritzkern für den Preformling gleichzeitig Blasdorn und ggf. den Reckdorn. Bei diesem Verfahren entfällt die Übergabe des Preformlings an eine separate Blasvorrichtung.

Von Seiten der Konsumenten besteht der Wunsch nach Kunststoffbehältern, insbesondere Kunststoffflaschen, die für den Einsatz möglichst komfortabel gestaltet sind, insbesondere leicht greifbar sind. Dabei sind Kunststoffbehälter bzw. Kunststoffflaschen mit einem Griffteil besonders beliebt. Aus dem Stand der Technik sind daher auch bereits Kunststoffbehälter bekannt, die beispielsweise ein separates Griffteil aufweisen. Der Kunststoffbehälter wird in einem Blasprozess hergestellt und danach das Griffteil in einem separaten Arbeitsschritt angebracht. Es sind auch Verfahren vorgeschlagen worden, bei denen ein separates Griffteil in die Blasform eingebracht und beim Aufblasen des Kunststoffbehälters mit diesem verbunden wird. Die Herstellverfahren von Kunststoffbehältern mit separaten Griffteilen ist aufwändig und relativ teuer. Aus der DE-B-24 56 723 sind Kunststoffbehälter, insbesondere Kunststoffflaschen mit integrierten Griffmulden oder Griffbereichen bekannt. Diese werden während des Blasverfahrens innerhalb der Blasform durch verstellbare Formwandungsteile hergestellt. Die verstellbaren Blasformteile führen zu einer gezielten Verformung des Kunststoffbehälters, um dadurch eine Griffmulde zu erzeugen. Zur Erzeugung eines Griffteils wird die Wandung des Kunststoffbehälters durch die verstellbaren Formwandungsteile gezielt geschwächt. Nach dem Entformen wird dann der geschwächte Wandungsbereich ausgeschnitten oder ausgestanzt. Das Herstellverfahren für die Griffmulden bzw. Griffteile ist ebenfalls relativ aufwändig und teuer. Es erfordert spezielle Blasformen mit verstellbaren Formwandungsteilen. Die zusätzliche Verstellung der Formwandungsteile erfordert eine sehr exakte Prozessführung und steht einer kurzen Zykluszeit entgegen.

Gemäß den Oberbegriffen der Ansprüche 1 und 7 ist aus der JP-A-05077312 ein Kunststoffbehälter mit einem Griffteil bekannt, der in einem Streckblasverfahren aus einem Doppel-Preformling hergestellt wird. Der Doppel-Preformling weist zwei nebeneinander angeordnete Hohlkörper auf, die durch einen Materialsteg miteinander verbunden sind. Aus dem grösseren der beiden Hohlkörper wird der Behälterkörper hergestellt. Das Griffteil wird innerhalb der Blasform mit einem separaten Reck-/Blasdorn aufgeblasen, wobei das freie Ende des Griffteils mit dem Behälterkörper verbunden wird, ohne dabei die Wandung des Behältes zu durchstossen. Der fertig aufgeblasen Kunststoffbehälter weist ein Griffteil auf, dass einerseits über einen Materialsteg und andererseits über die in der Blasform hergestellte Anbindestelle mit dem Behälterkörper verbunden ist.

In der US-A-5,178,817 ist beschrieben, wie aus einem zylindrischen Preformling ein Behälter ausgebildet werden kann, dessen Halsteil gegenüber der Behälterachse geneigt ist. Unter anderem ist dabei ein Verfahren beschrieben, bei dem während des Streckblasprozesses ein gekrümmter Reckdom in den Preformling eingefahren wird.

Aus der EP-A-1 083 129 ist ein in einem Extrusionsblasverfahren hergestellter Kunststoffbehälter mit einem Griffteil bekannt. Für Dekorationszwecke oder als Ersatz für eine Etikette ist der Kunststoffbehälter mit einem Schrumpfschlauch überzogen. Der Schrumpfschlauch erstreckt sich dabei nur über den Behälterkörper und spart das Griffteil aus.

Aufgabe der vorliegenden Erfindung ist es daher, einen Kunststoffbehälter, insbesondere eine Kunststoffflasche, mit einem integrierten Griffteil zu schaffen, der einfach und kostengünstig herstellbar ist. Das Herstellverfahren für den Kunststoffbehälter soll kurze Zykluszeiten erlauben. Auf komplizierte Blasformen mit zusätzlichen verstellbaren Formwandungsteilen soll verzichtet werden können. Dabei soll der Kunststoffbehälter insbesondere auch aus PET herstellbar sein.

Die Lösung dieser Aufgaben besteht in eine Kunststoffbehälter, insbesondere einer Kunststoffflasche, mit einem angeformten Griffteil, welcher die im kennzeichnenden Abschnitt des Patentanspruchs 1 aufgelisteten Merkmale aufweist Ein für die Herstellung des erfindungsgemässen Kunststoffbehälters ausgebildeter Preformling und ein Herstellverfahren für den erfindungsgemässen Kunststoffbehälter sind ebenfalls offenbart Weiterbildungen und/oder vorteilhafte Ausführungsvarianten der Erfindung sind Gegenstand der abhängigen Patentansprüche.

Ein erfindungsgemässer Kunststoffbehälter, insbesondere eine Kunststoffflasche, besitzt einen Behälterkörper, der ein Halsteil mit einer Ausgiessöffnung aufweist und ein an den Behälterkörper angeformtes Griffteil. Zur Erzielung kurzer Zykluszeiten und um bezüglich der einsetzbaren Materialien eine möglichst grosse Flexibilität zu haben, ist der Kunststoffbehälter in einem Streckblasverfahren aus einem Preformling hergestellt der in einem Kunststoffspritzverfahren gefertigt ist. Das Griffteil ist integral mit dem Behälterkörper ausgebildet und weist einen gereckten und geblasenen Griffabschnitt auf. Der Behälterkörper und der Griffabschnitt bilden einem gemeinsamen Hohlraum.

Damit der Behälter von der Hand des Anwenders gut ergriffen werden kann, erstreckt sich der gereckte und geblasene Griffabschnitt von einem an das Halsteil des Behälters anschliessenden Abschnitt im wesentlichen in einem spitzen Winkel zu einer Hauptachse des Behälters.

Damit das Griffteil im Streckblasverfahren herstellbar ist, wobei ein Hilfsreckdorn in das Griffteil eingefahren wird, beträgt der Winkel, den der Griffabschnitt an der Abzweigung vom Behälterkörper mit der Behälterhauptachse einschliesst, etwa 15° bis etwa 45°.

Aus ergonimischen Gründen kann es sich als vorteilhaft erweisen, wenn das Griffteil in Richtung des Behälterkörpers gekrümmt ausgebildet ist.

In einer Variante der Erfindung weist das integral mit dem Behälterkörper ausgebildete Griffteil ein freies Ende auf, das vom Behälterkörper beabstandet ist. Dies erlaubt es dem Anwender mit der vom Behälterboden kommenden Hand zwischen dem Griffteil und dem Behälterkörper durchzugreifen, um das Griffteil zu umfassen.

Der erfindungsgemässe Kunststoffbehälter kann aus verschiedenen Kunststoffen hergestellt sein. Beispiele dafür sind PET, PET-G, HDPE, PP, PVC oder auch gefüllte Kunststoffe. Diese Materialien sind besonders gut für das Spritzblas- bzw. das Spritzstreckblasverfahren geeignet. Er kann ein oder mehrschichtig aufgebaut sein. Bevorzugt besteht er aus PET. PET ist einer der gebräuchlichsten Kunststoffe für die Herstellung von Kunststoffflaschen. Er ist üblicherweise transparenz; kann sehr einfach im gewünschten Umfang eingefärbt werden, und ist insbesondere im Streckblasverfahren, bei dem ein zuvor in einem Kunststoffspritzverfahren geformter Preformling gereckt und aufgeblasen wird, sehr günstig zu verarbeiten. Sein Eigenschaften sind sehr gut bekannt, seine ausgezeichnete Eignung im Lebensmittelbereich ist hinlänglich erwiesen und erprobt.

Ein für die Herstellung des erfindungsgemässen Kunststoffbehälters geeigneter Preformling besitzt einem im wesentlichen zylindrischen Körper, der ein Halsteil mit einer Öffnung und einen geschlossenen Bodenbereich aufweist. In einem an das Halsteil anschliessenden Wandungsabschnitt ist der Preformling mit einer seitlichen Ausbuchtung versehen. Diese Ausbuchtung dient bei der Herstellung als Angriffsbereich für den Hilfsreckdom, mit dem innerhalb der Formkavität der Blasform aus dem ausgebuchteten Bereich das Griffteil erzeugt wird. Die seitliche Ausbuchtung am Preformling erstreckt sich vom Halsteil im wesentlichen parallel zur Achse des Körpers und bildet in einem Abstand von der Öffnung eine Arigriffsschulter. Die Angriffsschulter erleichtert das definierte Ansetzen des Hilfsreckdorns. Für die Herstellung eines komfortabel greifbaren Griffteils erweist es sich von Vorteil, wenn die seitliche Ausbuchtung am Körper des Preformlings eine Länge aufweist, die etwa 5 % bis etwa 50 % der axialen Gesamtlänge des Preformlings aufweist.

Das erfindungsgemässe Verfahren zur Herstellung eines Kunststoffbehälters, insbesondere einer Kunststoffflasche, mit einem angeformten Griffteil, zeichnet sich dadurch aus; dass ein Preformling, dessen Körper mit einer seitlichen Ausbuchtung versehen ist, in eine Kavität einer Blasform eingebracht wird. Nach dem Ansetzen der Blasdüse an das Halsteil des Preformlings wird der Preformling vor- und während des Blasvorgangs mit zwei Reckdornen beaufschlagt. Dabei wird der Preformling mit einem Hauptreckdorn in Richtung einer Hauptachse der Blasformkavität und im Bereich des auszubildenden Griffteils mit einem Hilfsreckdorn gereckt. Der Hilfsreckdorn ist dabei gegenüber dem Hauptreckdorn geneigt angeordnet. Nach dem Aufblasen bilden der Behälterkörper und das Griffteil einem gemeinsamen Hohlraum. Das Verfahren entspricht bis auf die Zustellung des Hilfsdorns dem hinlänglich bekannten Streckblasverfahren. Es ist schnell und kostengünstig durchführbar.

Für die Herstellung eines Kunststoffbehälters mit einem gekrümmten Griffteil wird ein im wesentlichen sichelförmig gekrümmter Hilfsreckdorn auf die seitliche Ausbuchtung am Körper des Preformlings zugestellt. Die Zustellung des Hilfsreckdorns innerhalb der Formkavität erfolgt dabei entlang einer gekrümmten Bahn.

Weitere Vorteile und Merkmale ergeben sich aus der nachfolgenden Beschreibung von beispielsweisen Ausführungsvarianten der Erfindung unter Bezugnahme auf die schematischen Zeichnungen. Es zeigen in nicht massstabsgetreuer Darstellung:
- Fig. 1: einen Kunststoffbehälter, insbesondere eine Kunststoffflasche mit einem integral ausgebildeten Griffteil;
- Fig. 2: einen Preformling zur Herstellung eines Kunststoffbehälters gemäss Fig.1 in einem Streckblasverfahren; und
- Fig. 3: eine Darstellung des in eine Blasformkavität eingesetzten und bereits gereckten Preformlings aus Fig. 2.

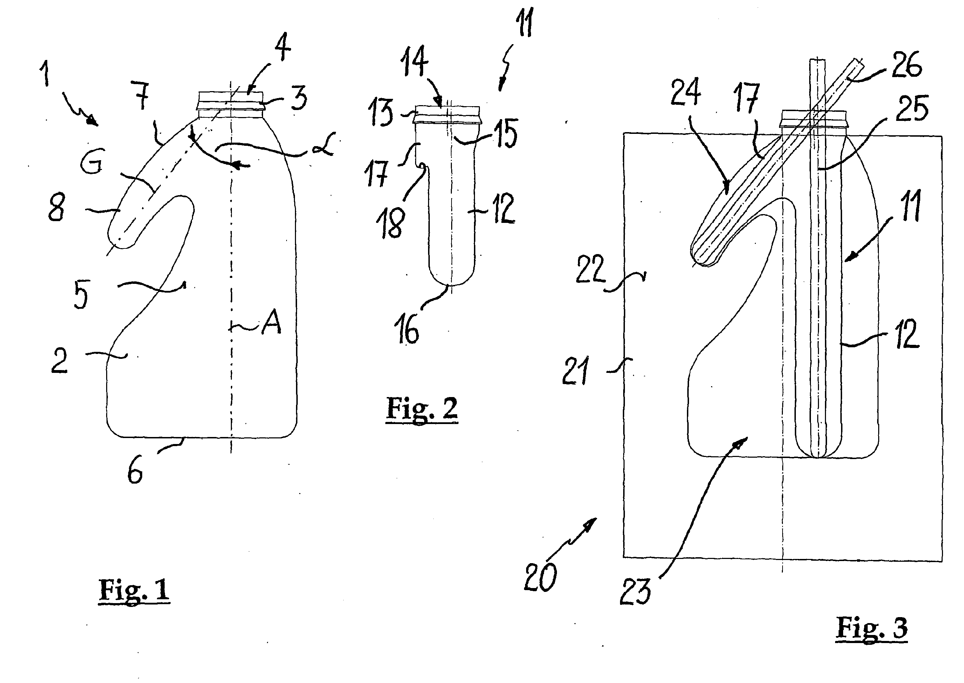

Fig. 1 zeigt einen erfindungsgemäss ausgebildeten Kunststoffbehälter, insbesondere eine Kunststoffflasche, die gesamthaft mit dem Bezugszeichen 1 versehen ist. Die Kunststoffflasche ist in einem Streckblasverfahren aus einem zuvor in einem Kunststoffspritzverfahren hergestellten Preformling hergestellt. Die Kunststoffflasche weist einen Flaschenkörper 2 auf, an den ein Halsteil 3 angeformt ist. Das Bezugszeichen 5 bezeichnet die Wandung des Flaschenkörpers 2, welche das Nutzvolumen der Kunst stoffflasche umschliesst. Das Halsteil 3 ist mit einer Ausgiessöffnung 4 versehen. An der dem Halsteil 3 gegenüberliegenden Seite ist der Flaschenkörper mit einem Flaschenboden verschlossen. Unterhalb des Halsteils 3 setzt ein Griffteil 7 an, das einstückig und integral mit dem Flaschenkörper 2 ausgebildet ist. Das Griffteil 7 weist einen Griffabschnitt 8 auf, der gereckt und aufgeblasen ist. Bei dem dargestellten Ausführungsbeispiel endet das Griffteil 7 bzw. dessen gereckter Griffabschnitt 8 in einem Abstand vor der Wandung 5 des Flaschenkörpers 2. Eine Achse G des Griffteils 7 schliesst mit einer Haupachse A des Flaschenkörpers 2 einen Winkel α ein, der etwa 15° bis etwa 45° beträgt. Das Griffteil 7 ist hohl ausgebildet und erweitert das Nutzvolumen der Kunststoffflasche 1. In einer Variante der Erfindung kann auf das Griffteil 7 der fertig geblasenen Kusntstoffflasche auch noch ein Übergriff aufgesteckt werden, der beispielsweise in einer anderen Farbe gestaltet ist. Zu diesen Zweck können am Griffteil 7 auch noch Vorsprünge vorgesehen sein, die mit entsprechenden Aussparungen oder anderen entsprechenden Gegenstücken des Übergriffs verrastbar sind.

Fig. 2 zeigt einen Preformling 11, der für die Herstellung der in Fig.1 beispielsweise dargestellten Kunststoffflasche ausgebildet ist. Der Preformling 11 ist in einem Kunststoffspritzverfahren beispielsweise aus PET hergestellt. Der Preformling 11 besitzt einen im wesentlichen zylindrischen Körper 2 mit einem geschlossenen Bodenbereich 16. Ein Halsteil 13 des Preformlings 11 ist mit einer Öffnung 14 versehen. In einem Wandungsabschnitt 15, der an das Halsteil 13 anschliesst, ist eine seitliche Ausbuchtung 17 ausgebildet. Aus dieser seitlichen Ausbuchtung 17 wird im Streckblasverfahren durch Recken und Aufblasen das Griffteil geformt. Die seitliche Ausbuchtung des beispielsweise dargestellten Preformlings 11 verläuft im wesentlichen parallel zum zylindrischen Körper 12 des Preformlings 11 und erstreckt sich über etwa 5 % bis etwa 50 % der Gesamtlänge des Preformlings. Am von der Öffnung 14 entfernteren Ende geht die Ausbuchtung 17 unter Bildung einer Angriffsschulter 18 wieder in den Körper 12 des Preformlings 11 über.

Als Materialien für den Preformling und die daraus hergestellten Kunststoffbehälter, insbesondere Kunststoffflaschen, mit integriertem Griffteil sind alle für das Spritzblas- bzw. Spritzstreckblasverfahren geeigneten Materialien geeignet. Bevorzugte Materialien sind PET, PVC, PP, PET-G, HDPE oder auch gefüllte Kunststoffe. Das Material kann ein- oder mehrschichtig aufgebaut sein.

Fig. 3 zeigt schematisch ein Blasformwerkzeug 20 mit einer Formkavität 23, 24. Das Blasformwerkzeug 20 weist meist zwei Blasformhälften auf. Fig. 3 zeigt eine der Blasformhälftenk die mit dem Bezugszeichen 21 versehen ist. Dabei ist die Blasformhälfte. 21 mit Sicht auf die Trennfläche 22 dargestellt. Die Blasformhälften sind voneinander trennbar, um einen Preformling 11 in die Formkavität 23, 24 einzulegen bzw. die fertig geblasene Kunststoffflasche wieder entformen zu können. In Fig. 3 ist aus Gründen der Übersichtlichkeit auf eine Darstellung der Blasmaschine bzw. des Blaskopfes mit der Blasdüse verzichtet worden. Der in die Formkavität 23, 24 eingelegte Preformling 11 ist in einem Zwischenstadium seiner Herstellung gezeigt, bei dem sein zylindrischer Körper 12, aus dem der Flaschenkörper geblasen wird, und die seitliche Ausbuchtung 17, aus der das Griffteil geformt wird, bereits in vollem Umfang gereckt sind. Dazu wird ein Hauptreckdorn 25 in den den Flaschenkörper definierenden Teil 23 der Formkavität eingefahren. Dabei wird der zylindrische Körper 12 des Preformlings im wesentlichen bis zum Boden der Formkavität gereckt. Ein Hilfsreckdorn 26 ist in einem spitzen Winkel von vorzugsweise etwa 5° bis etwa 45° gegenüber dem Hauptreckdorn 25 geneigt und wird in den das Griffteil definierenden Abschnitt 24 der Formkavität eingefahren. Dabei wird die seitliche Ausbuchtung 17 im wesentlichen bis zum Endes dieses Abschnitts 24 gereckt. Das Einfahren der Reckdorne 25, 26 erfolgt im wesentlichen zeitgleich oder in geringem zeitlichen Abstand voneinander. Über die Blasdüse kann bereits während des Reckens des Preformlings 11 Luft mit Überdruck eingeblasen werden, um dadurch eine Vorblase zu erstellen, aus der dann im eigentlichen Blasvorgang die Kunststoffflasche gemäss der Formkavität aufgeblasen wird. Die fertig aufgeblasene Kunststoffflasche wird dann entformt.

Der in Fig. 3 dargestellte Hilfsreckdorn 26 weist eine geradlinige Erstreckung auf. Für die Herstellung eines in Richtung der Flaschenwandung gekrümmten Griffteils kann der Hilfsreckdorn auch im wesentlichen sichelförmig gekrümmt ausgebildet sein. In diesem Fall wird er auch entlang einer gekrümmten Bahn in den das Griffteil definierenden Abschnitt der Formkavität eingefahren.

## Patentansprüche

1. Kunststoffbehälter mit einem Behälterkörper (2), der ein Halsteil (3) mit einer Ausgiessöffnung (4) aufweist, und einem angeformten Griffteil (7), welches in einem Streckblasverfahren aus einem in einem Kunststoffspritzverfahren hergestellten Preformling (11) integral mit dem Behälterkörper (2) ausgebildet ist und einen gereckten und geblasenen Griffabschnitt (8) aufweist, **dadurch gekennzeichnet, dass** der Behälterkörper (2) und der Griffabschnitt (8) einen gemeinsamen Hohlraum bilden.

2. Kunststoffbehälter nach Anspruch 1, **dadurch gekennzeichnet, dass** der gereckte und geblasene Griffabschnitt (8) sich von einem an das Halsteil (3) des Behälters (1) anschliessenden Abschnitt im wesentlichen in einem spitzen Winkel zu einer Behälterhauptachse (A) erstreckt.

3. Kunststoffbehälter nach Anspruch 2, **dadurch gekennzeichnet, dass** der Winkel (α), den der Griffabschnitt (8) an der Abzweigung vom Behälterkörper (2) mit der Behälterhauptachse (A) einschliesst, etwa 5° bis etwa 45° beträgt.

4. Kunststoffbehälter nach einem der vorangehenden Ansprüche, **dadurch gekennzeichnet, dass** das Griffteil (7) in Richtung des Behälterkörpers (2) gekrümmt ausgebildet ist.

5. Kunststoffbehälter nach einem der vorangehenden Ansprüche, **dadurch gekennzeichnet, dass** das Griffteil (7) ein freies Ende aufweist, das vom Behälterkörper (2) beabstandet ist.

6. Kunststoffbehälter nach einem der vorangehenden Ansprüche, **dadurch gekennzeichnet, dass** er aus PET, PET-G, HDPE, PP, PVC oder auch aus einem gefüllten Kunststoff besteht.

7. Preformling zur Herstellung eines Kunststoffbehälters (1) gemäss einem der vorangehenden Ansprüche mit einem im wesentlichen zylindrischen Körper. (12), der ein Halsteil (13) mit einer Öffnung (14) und einen geschlossenen Bodenbereich (16) aufweist **dadurch gekennzeichnet, dass** in einem an das Halsteil (13) anschliessenden Wandungsabschnitt (15) mit einer seitlichen Ausbuchtung (17) versehen ist.

8. Preformling nach Anspruch 7, **dadurch gekennzeichnet, dass** die seitliche Ausbuchtung (17) sich vom Halsteil (13) im wesentlichen parallel zur Achse des Körpers (12) erstreckt und in einem Abstand von der Öffnung (14) eine Angriffsschulter (18) bildet.

9. Preformling gemäß Anspruch 7 oder 8, **dadurch gekennzeichnet, dass** die seitliche Ausbuchtung (17) am Körper des Preformlings eine Länge aufweist, die etwa 5 % bis etwa 50 % der axialen Gesamtlänge des Preformlings (11) aufweist.

10. Verfahren zur Herstellung eines Kunststoffbehälters (1) mit einem angeformten Griffteil (7), bei dem ein in einem Kunststoffspritzverfahren hergestellter Preformling (11) gemäss einem der Ansprüche 7 bis 9 in eine Formkavität (23, 24) eines Blasformwerkzeugs (20) eingebracht, die Blasdüse angesetzt, vor- und während des Blasvorgangs der Preformling (11) mit zwei Reckdomen (25, 26) beaufschlagt wird, wobei der Preformling (11) mit einem Hauptreckdorn (25) in Richtung einer Hauptachse der Formkavität (23) und im Bereich (24) des auszubildenden Griffteils mit einem Hilfsreckdorn (26) gereckt und aufgeblasen wird, wobei der Hilfsreckdorn (26) gegenüber dem Hauptreckdorn (25) geneigt angeordnet und geführt ist und das Griffteil (7) integral mit dem Kunststoffbehälter ausgebildet wird, dass es (7) nach dem Aufblasen mit einem Behälterkörper (2) einen gemeinsamen Hohlraum bildet.

11. Verfahren nach Anspruch 10; **dadurch gekennzeichnet, dass** der Hilfsreckdorn im wesentlichen sichelförmig gekrümmt ausgebildet ist und entlang einer gekrümmten Bahn in der Formkavität verschoben wird.

## Claims

1. A plastic container with a container body (2) which comprises a neck part (3) with a pour-out opening (4), and with an integrally formed grip part (7), which is integrally formed with the container body (2) in a stretch-blow method from a preform (11) manufactured in an injection moulding method, and comprises a stretched and blown grip section (8), **characterised in that** the container body (2) and the grip section (8) form a common cavity.

2. A plastic container according to claim 1, **characterised in that** the stretched and blown grip section (8) extends from a section connecting to the neck part (3) of the container (1) essentially at an acute angle to a container main axis (A).

3. A plastic container according to claim 2, **characterised in that** the angle (α) which the grip section (8) on the branch-off from the container body (2) encloses with the container main axis (A), is about 5° to about 45°.

4. A plastic container according to one of the preceding claims, **characterised in that** the grip part (7) is designed curved in the direction of the container body (2).

5. A plastic container according to one of the preceding claims, **characterised in that** the grip part (7) comprises a free end which is distanced to the container body (2).

6. A plastic container according to one of the preceding claims, **characterised in that** it consists of PET, PET-G, HDPE, PP, PVC or of a filled plastic.

7. A preform for the manufacture of a plastic container (1) according to one of the preceding claims, with an essentially cylindrical body (12), which comprises a neck part (13) with an opening (14), and a closed base region (16), **characterised in that** this body is provided with a lateral bulge (17) in a wall section (15) connecting to the neck part (13).

8. A preform according to claim 7, **characterised in that** the lateral bulge (17) extends from the neck part (13) essentially parallel to the axis of the body (12) and forms an engagement shoulder (18) at a distance to the opening (14).

9. A preform according to claim 7 or 8, **characterised in that** the lateral bulge (17) on the body of the preform has a length which is about 5 % to about 50 % of the axial total length of the preform (11).

10. A method for manufacturing a plastic container (1) with an integrally formed grip part (7), with which a preform (11) according to one of the claims 7 to 9, manufactured in a plastic injection moulding method, is introduced into the mould cavity (23, 24) of a blow-moulding tool (20), the blow nozzle applied, is impinged with two stretch mandrels (25, 26) before and during the blow procedure of the preform (11), wherein the preform (11) is stretched and blown with a main stretch mandrel (25) in the direction of the main axis of the mould cavity (23), and in the region (24) of the grip part to be formed, is stretched and blown with an auxiliary stretch mandrel (26), wherein the auxiliary stretch mandrel (26) is arranged and guided inclined with respect to the main stretch mandrel (25), and the grip part (7) is integrally formed with the plastic container, wherein it (7) forms a common cavity with a container body (2) after the blowing.

11. A method according to claim 10, **characterised in that** the auxiliary stretch mandrel is designed curved in an essentially sickle-like manner and is displaced along a curved path in the mould cavity.

## Revendications

1. Récipient en matière plastique avec un corps de récipient (2) qui présente une partie col (3) avec une ouverture pour verser (4) et avec une partie poignée moulée (7) qui est formée lors un processus de soufflage-étirage par une pré-ébauche (11) fabriquée par un procédé d'injection de plastique qui est en une pièce avec le corps du récipient (2) et qui présente une portion de poignée (8) soufflée et étirée, **caractérisé en ce que** le corps de récipient (2) et la portion de poignée (8) forment un espace creux commun.

2. Récipient en matière plastique selon la revendication 1, **caractérisé en ce que** la portion de poignée étirée et soufflée (8) s'étend à partir d'une portion qui se rattache à la partie col (3) du récipient (1) substantiellement en un angle aigu par rapport à un axe principal de récipient (A).

3. Récipient en matière plastique selon la revendication 2, **caractérisé en ce que** l'angle (α) que la portion de poignée (8) inclut au branchement du corps du récipient (2) avec l'axe principal de récipient (A) est d'environ 5° à environ 45°.

4. Récipient en matière plastique selon l'une des revendications précédentes, **caractérisé en ce que** la partie poignée (7) est configurée courbée en direction du corps de récipient (2).

5. Récipient en matière plastique selon l'une des revendications précédentes, **caractérisé en ce que** la partie poignée (7) présente une extrémité libre qui est espacée du corps de récipient (2).

6. Récipient en matière plastique selon l'une des revendications précédentes, **caractérisé en ce qu'**il est constitué par du PET, du PET-G, du PEHD, du PP, du PVC ou même par une matière plastique remplie.

7. Pré-ébauche pour la fabrication d'un récipient en matière plastique (1) selon l'une des revendications précédente avec un corps substantiellement cylindrique (12) qui présente une partie col (13) avec une ouverture (14) et une zone de fond fermée (16), **caractérisée en ce qu'**elle est pourvue d'un évidement latéral (17) dans une section de paroi (15) qui se rattache à la partie col (13).

8. Pré-ébauche selon la revendication 7, **caractérisée en ce que** l'évidement latéral (17) s'étend à partir de la partie col (13) substantiellement parallèlement à l'axe du corps (12) et forme un épaulement d'attaque (18) à un écart de l'ouverture (14).

9. Pré-ébauche selon la revendication 7 ou 8, **caractérisée en ce que** l'évidement latéral (17) présente une longueur sur le corps de la pré-ébauche qui présente environ de 5 % à environ 50 % de la longueur axiale totale de la pré-ébauche (11).

10. Procédé pour la fabrication d'un récipient en matière plastique (1) avec une partie poignée moulée (7) pour laquelle une pré-ébauche (11) fabriquée par un procédé d'injection de plastique selon l'une des revendications 7 à 9 est introduite dans une cavité moulée (23, 24) d'un outil de moulage par soufflage (20), la buse soufflante est posée, la pré-ébauche (11) est chargée avant et pendant l'opération de soufflage avec deux mandrins d'étirage (25, 26), la pré-ébauche (11) étant étirée et soufflée avec un mandrin d'étirage principal (25) dans le sens d'un axe principal de la cavité moulée (23) et avec un mandrin d'étirage secondaire (26) dans la zone (24) de la partie poignée à former, le mandrin d'étirage secondaire (26) étant placé et guidé incliné par rapport au mandrin d'étirage principal (25) et la partie poignée (7) étant configurée en une pièce avec le récipient en matière plastique de manière à ce qu'elle (7) forme, après le soufflage, une cavité commune avec le corps de récipient (2).

11. Procédé selon la revendication 10, **caractérisé en ce que** le mandrin d'étirage secondaire est configuré courbé substantiellement en forme de faucille et est déplacé dans la cavité moulée le long d'une trajectoire recourbée.
